# DEMANDE DE BREVET EUROPEEN

(11) **EP 0 728 641 A1**
(43) Date de publication de la demande: **28.08.1996**
(21) Numéro de dépôt: 96102473.4
(22) Date de dépôt: 19.02.1996
(51) Int. Cl.: B60S 1/38

(54) **Balai d'essuie-glace comportant une coiffe d'arrêt de la raclette d'essuyage montée sur une griffe de maintien de la raclette**

(30) Priorité: 21.02.1995 FR 9502085
(71) Demandeur: VALEO SYSTEMES D'ESSUYAGE, 78321 La Verrière (FR)
(72) Inventeur: Giraud, Frédéric, 63000 Clermont-Ferrand (FR)
(74) Mandataire: Gamonal, Didier

(57) **Abrégé**

L'invention propose un balai d'essuie-glace (10) du type comportant une structure de support d'une raclette d'essuyage qui comporte au moins un élément articulé (26) dont une griffe d'extrémité (30) qui supporte la raclette d'essuyage (12) et qui est conformée en étrier, et du type comportant une coiffe amovible d'arrêt (54) qui est fixée par emboîtement élastique sur la griffe d'extrémité (30) de l'élément allongé (26), caractérisé en ce que la coiffe amovible d'arrêt (54) comporte deux joues latérales (56) parallèles et déformables élastiquement dont chacune comporte une fenêtre (76) dans laquelle est reçue une portion latérale de la tête (32) de la griffe (30) et qui comporte une fente (78) orientée vers le bas (62) pour le passage de la branche latérale correspondante (64) de la griffe (30).

## Description

La présente invention concerne un balai d'essuie-glace de véhicule automobile.

L'invention concerne plus particulièrement un balai d'essuie-glace du type comportant une structure de support d'une raclette d'essuyage qui comporte au moins un élément articulé de support de la lame dont une portion d'extrémité supporte la raclette d'essuyage au voisinage de l'une de ses extrémités longitudinales, avec une possibilité de déplacement longitudinal limitée de la raclette par rapport à la portion d'extrémité de l'élément articulé qui est conformée en un étrier qui chevauche un talon supérieur de la raclette d'essuyage et qui comporte deux branches latérales qui s'étendent verticalement le long des faces latérales opposées du talon supérieur depuis une tête de l'étrier.

On connaît de nombreux types de balais d'essuie-glace dans lesquelles la structure de support de la raclette d'essuyage est constituée par un ou plusieurs éléments de support en forme de palonniers articulés soit directement sur le bras d'entraînement du balai d'essuie-glace, dans le cas du palonnier principal, ou sur ce dernier dans le cas de palonniers intermédiaires et/ou secondaires.

Chacun des éléments de la structure de support qui reçoit la raclette d'essuyage comporte une ou deux extrémités longitudinales opposées, en forme de griffe ou d'étrier, qui délimitent une rainure dans laquelle le talon supérieur de la raclette d'essuyage est engagé par coulissement.

Afin d'assurer le maintien en position longitudinale du talon de la raclette d'essuyage sur la structure de support articulée et d'éviter notamment que la raclette ne coulisse de manière trop importante, il est connu d'assurer cette fonction d'arrêt à l'aide d'au moins une pièce d'arrêt qui est fixée à au moins une extrémité de la raclette d'essuyage, sur le talon supérieur de cette dernière.

Ces pièces d'arrêt sont généralement constituées par des pièces de petites dimensions qui sont emboîtées élastiquement sur le talon supérieur de la lame d'essuyage.

Lorsque l'on désire procéder à un changement de la lame d'essuyage, il est nécessaire d'ôter une première pièce d'arrêt afin de dégager la raclette d'essuyage par coulissement, puis d'ôter la seconde pièce d'arrêt avant de jeter la raclette usagée.

Le remplacement se poursuit en introduisant une nouvelle raclette d'essuyage sur laquelle on vient emboîter élastiquement, à chacune de ses extrémités, les deux pièces d'arrêt.

Il est donc nécessaire de prévoir des pièces d'arrêt qui sont spécifiques à la conformation du talon supérieur de chaque type de raclette d'essuyage et il existe de plus un risque de perdre ces pièces qui sont de petites dimensions, lors des opérations de montage et de remplacement de la lame d'essuyage.

Afin de remédier à cet inconvénient, il a déjà été proposé dans le document FR-A-2 681 025 une conception dans laquelle le balai d'essuie-glace comporte une coiffe amovible d'arrêt qui est fixée par emboîtement élastique sur la portion d'extrémité en forme d'étrier de l'élément allongé et qui comporte une surface transversale de butée qui s'étend en regard de l'extrémité libre du talon supérieur de la raclette d'essuyage.

Un tel exemple d'une pièce d'arrêt réalisée sous la forme d'une coiffe portée par la portion d'extrémité en forme d'étrier permet de réaliser de manière simple et efficace une immobilisation longitudinale de la raclette d'essuyage par rapport à sa structure articulée de support en ne nécessitant aucune modification ni conformation spéciale du talon de la raclette d'essuyage.

Cette conception permet de s'adapter à différentes longueurs et dimensions de la structure articulée de support dans laquelle il suffit de prévoir que les deux extrémités opposées des deux palonniers d'extrémité comportent des moyens pour recevoir une coiffe du type décrit dans ce document.

Cette conception permet enfin d'obtenir une grande standardisation des composants constitutifs de la structure articulée de support ainsi que des raclettes d'essuyage qui peuvent toutes être du même type, mais simplement d'une longueur différente en fonction de l'utilisation envisagée.

Enfin, l'agencement d'une coiffe d'arrêt rapportée sur une extrémité du palonnier de support lui confère également une fonction de carénage aérodynamique des extrémités de palonniers et de la raclette d'essuyage.

Toutefois, les moyens de fixation de la coiffe d'arrêt décrits et représentés dans ce document nécessitent de conformer la tête de l'étrier avec des formes et un profil particulier permettant notamment d'y emboîter un talon de montage de la coiffe et qui sont nécessaires pour réaliser l'accrochage de la coiffe qui est de plus réalisée en deux parties articulées par une charnière mince réalisée sous la forme d'un film plastique.

Cette conception nécessite donc que les portions d'extrémité en forme d'étrier, également appelées griffes, qui sont agencées aux deux extrémités longitudinales opposées de la structure articulée de support présentent une conformation particulière.

De plus, la réalisation de la coiffe en deux parties articulées pour son montage en position n'est pas entièrement satisfaisant dans la mesure où la zone amincie constituant la charnière entre les deux parties est particulièrement fragile et risque de se casser, notamment lorsque l'on ôte la coiffe pour procéder au remplacement de la raclette d'essuyage.

La présente invention a pour but de proposer une nouvelle conception d'un balai d'essuie-glace qui remédie aux inconvénients qui viennent d'être mentionnés.

Dans ce but, l'invention propose un balai d'essuie-glace caractérisé en ce que la coiffe amovible d'arrêt comporte deux joues latérales parallèles et déformables élastiquement dont chacune comporte une fenêtre dans laquelle est reçue une portion latérale de la tête de l'étrier et qui comporte une fente orientée vers le bas pour le passage de la branche correspondante de l'étrier.

Selon d'autres caractéristiques de l'invention :
- la largeur de la tête, et la largeur de la fente de la fenêtre correspond à celle de la branche ;
- le contour intérieur de la fenêtre et de la fente épouse sensiblement le contour extérieur de la portion latérale correspondante de la tête de l'étrier et le contour de la branche correspondante ;
- les deux joues latérales de la coiffe sont reliées entre elles, au voisinage de l'une de leurs extrémités longitudinales opposées, par une plaque transversale avant de liaison qui s'étend en regard de l'extrémité libre du talon supérieur de la raclette d'essuyage et dont la face interne constitue ladite face transversale de butée ;
- les deux joues latérales de la coiffe sont reliées entre elles, par leurs bords longitudinaux supérieurs, par une plaque supérieure de liaison qui prolonge vers l'arrière la plaque transversale avant de liaison pour recouvrir la tête de l'étrier ;
- la partie arrière de la coiffe comporte une ouverture pour le passage d'un bras allongé de l'élément articulé qui s'étend longitudinalement vers l'arrière depuis la tête de l'étrier ;
- la largeur transversale du bras est inférieure à la largeur transversale de la tête et le contour intérieur de l'ouverture formée dans la partie arrière de la coiffe d'arrêt épouse le contour extérieur du bras de l'élément articulé ;
- l'ouverture débouche vers le bas pour permettre l'introduction du bras dans l'ouverture ;
- la tête de l'étrier présente une forme sensiblement parallélépipédique rectangle ;
- le bras allongé de l'élément articulé s'étend depuis une face transversale arrière de la tête de l'étrier.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective qui illustre une raclette d'essuyage et la portion d'extrémité en forme de griffe d'un palonnier appartenant à une structure de liaison d'un balai d'essuie-glace ;
- la figure 2 est une vue selon la direction de la flèche F de la figure 1 qui illustre la partie arrière de la griffe en forme d'étrier;
- la figure 3 est une vue en perspective, d'une coiffe d'arrêt réalisée conformément aux enseignements de l'invention et qui est destinée à équiper le balai d'essuie-glace illustré à la figure 1 ;
- la figure 4 est une vue en perspective de dessous de la coiffe illustrée à la figure 3 ;
- la figure 5 est une vue latérale en élévation qui illustre la coiffe d'arrêt montée en position à l'extrémité du palonnier pour retenir longitudinalement la raclette d'essuyage ;
- la figure 6 est une vue de dessous de la coiffe illustrée à la figure 5 ;
- la figure 7 est une vue similaire à celle de la figure 5 qui illustre, en section longitudinale selon la ligne 7-7 de la figure 6, la coiffe d'arrêt en position montée ; et
- la figure 8 est une vue similaire à celle de la figure 2 qui illustre la coiffe d'arrêt en position montée.

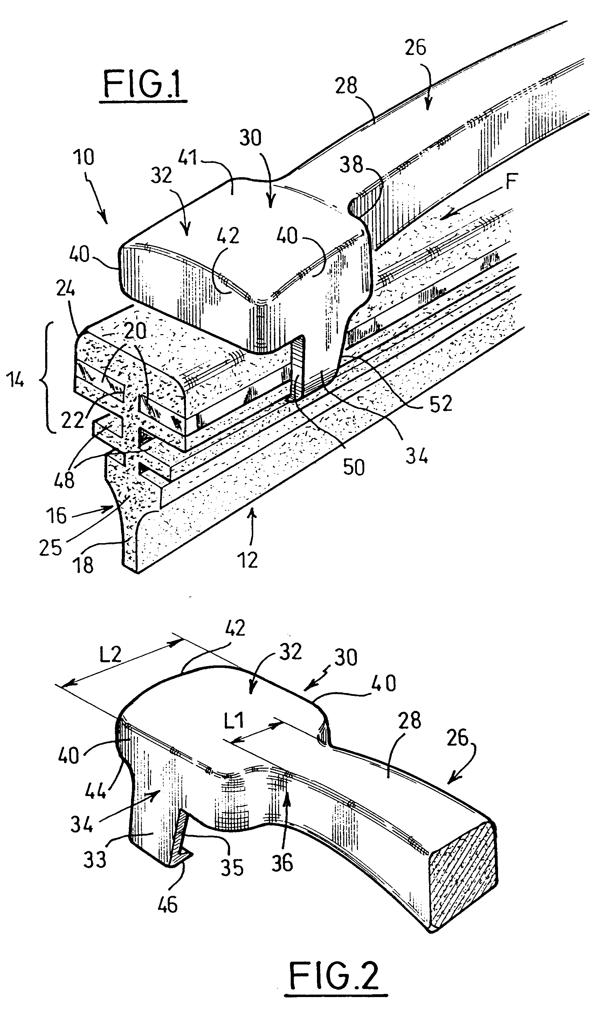

On a représenté sur la figure 1 une partie d'extrémité longitudinale 10 d'un balai d'essuie-glace de véhicule automobile.

On reconnaît sur la figure 1 une raclette d'essuyage 12 constituée pour l'essentiel par un talon supérieur 14 et par une partie inférieure de raclage 16 en forme de flèche inversée dont la pointe 18 est destinée à racler la surface de la vitre à essuyer (non représentée).

Le talon supérieur 14 présente, en section transversale, un contour sensiblement rectangulaire.

La raclette d'essuyage 12 est réalisée par moulage, par exemple par extrusion, en une seule pièce en un matériau déformable élastiquement.

Le talon 14 est renforcé par deux vertèbres longitudinales de renfort 20 qui sont montées dans des rainures longitudinales 22 formées respectivement dans les faces latérales parallèles 24 du talon 14.

Selon une conception connue, le balai d'essuie-glace est constitué par une structure articulée de support de la raclette d'essuyage 12 qui comporte au moins un palonnier d'extrémité 26.

Le palonnier 26 est constitué pour l'essentiel par un bras allongé 28 qui est articulé, dans sa partie médiane non représentée, autour d'un axe d'articulation sensiblement perpendiculaire à la direction longitudinale dans laquelle s'étendent la raclette d'essuyage 12 et l'ensemble du balai d'essuie-glace 10.

La portion d'extrémité 30 du bras 28 du palonnier 26 est une partie en forme d'étrier, également appelée griffe, qui a pour fonction d'assurer la retenue du talon supérieur 14 de la raclette d'essuyage 12.

La structure articulée est une structure de répartition de l'effort d'essuyage qui se déforme en fonction des déplacements du balai d'essuie-glace et en fonction du galbe de la vitre à essuyer.

Afin de faciliter cette déformation, il est nécessaire que le talon supérieur 14 de la raclette d'essuyage 12 puisse se déplacer longitudinalement, selon une course limitée, à l'intérieur des différentes griffes des palonniers.

A cet effet, la portion d'extrémité en forme de griffe 30 est constituée pour l'essentiel pour une tête 32 de l'étrier de forme générale parallélépipédique rectangle qui se prolonge verticalement vers le bas par deux branches latérales opposées 34.

Au niveau de sa zone 36 de raccordement avec la face transversale arrière 38 de la tête 32 de l'étrier 30, le bras 28 présente une largeur transversale L1 qui est inférieure à la largeur transversale L2 de la tête 32.

La tête 32 est délimitée par deux faces latérales parallèles et opposées 40, par une face transversale avant 42 et par des forces supérieure 41 et inférieure 44.

Chacune des branches latérales 34 s'étend verticalement depuis la face inférieure 44 de la tête 32 le long d'une face latérale correspondante 24 du talon 14 de la raclette d'essuyage 12.

La face latérale externe 33 de chaque branche 34 est située dans le même plan que la face latérale 40 de la tête 32 et la face latérale interne 35 de chaque branche 34 est sensiblement en contact avec la face latérale 24 du talon supérieur 14.

Au voisinage de son extrémité inférieure, chacune des branches 34 de guidage en coulissement du talon supérieur 14 se termine par une patte 46 rabattue à 90° vers l'intérieur et qui est reçue dans une rainure longitudinale correspondante 48 du talon 14 pour retenir verticalement le talon 14 dans l'étrier 30.

Chaque branche 34 est délimitée longitudinalement par deux bords sensiblement verticaux et opposés, un bord avant 50 et un bord arrière 52.

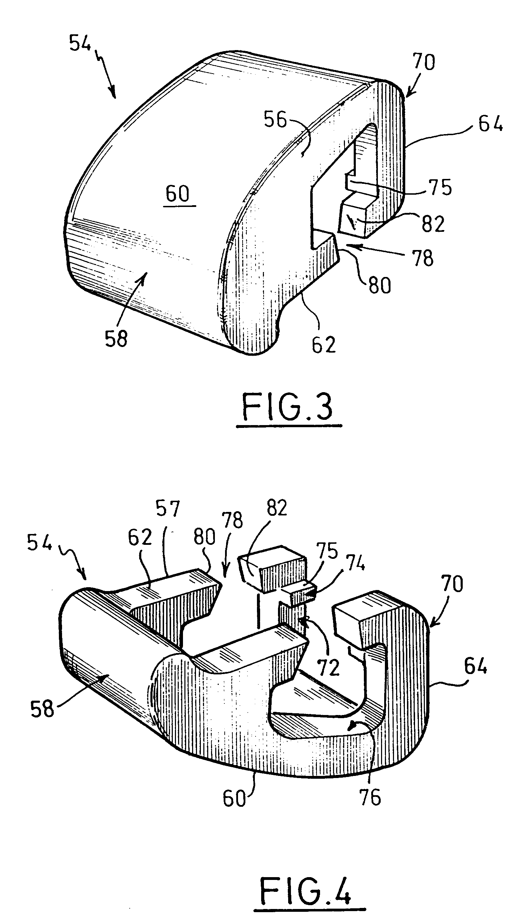

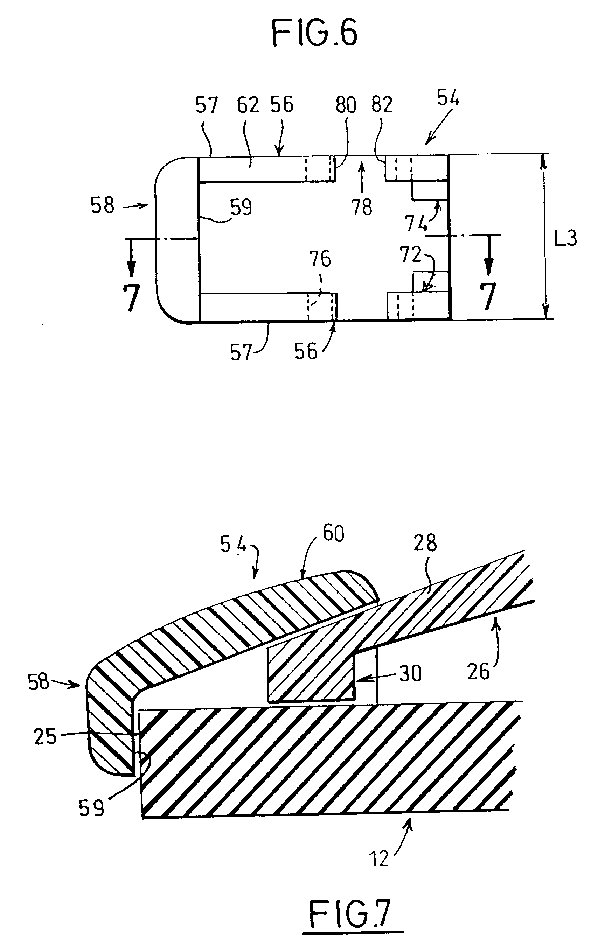

On décrira maintenant la coiffe d'arrêt 54 représentée aux figures 3 à 7 et qui est destinée à équiper l'étrier d'extrémité 30 pour retenir longitudinalement la raclette d'essuyage 12 et limiter les déplacements longitudinaux de cette dernière.

La coiffe d'arrêt 54 est une pièce moulée en matière plastique qui est constituée pour l'essentiel par deux joues latérales parallèles 56 qui sont reliées entre elles par une plaque transversale avant de liaison 58 et par une plaque supérieure de liaison 60.

Chacune des joues latérales 56 est délimitée par un bord longitudinal inférieur 62, par un bord transversal arrière 64.

Les bords transversaux avant 66 des ailes latérales 56 sont reliés entre eux par la plaque transversale avant de liaison 58 et les bords supérieurs longitudinaux 68 sont reliés entre eux par la plaque supérieure de liaison 60.

La partie ou face transversale arrière 70 de la coiffe d'arrêt 54 est une face ouverte qui comporte une ouverture 72 de contour intérieur sensiblement carré et dont les dimensions sont complémentaires de celles de la partie d'extrémité 36 du bras 28 du palonnier 26.

L'ouverture 72 débouche verticalement vers le bas grâce à une fente 74 formée entre des pattes transversales 75 qui permet d'introduire, verticalement de bas en haut, le bras 28 dans l'ouverture 70 par déformation élastique de la coiffe tendant à écarter transversalement les joues latérales 56 l'une de l'autre.

Les joues latérales 56, la plaque transversale avant de liaison 58 et la plaque supérieure de liaison 60 délimitent un logement interne qui est susceptible de recevoir la tête 32 de la griffe 30.

Conformément aux enseignements de l'invention, chacune des joues latérales 56 comporte une fenêtre 76 dont le contour interne en forme de trapèze épouse sensiblement le contour externe de la tête 32 délimitée par ses faces 44, 42, 41 et 38.

Afin de permettre le passage de chacune des branches 34, chaque fenêtre 76 débouche verticalement vers le bas dans le bord inférieur 62 de la joue latérale correspondante par une fente verticale 78.

La forme de la fente 78 est complémentaire de celle de la branche 34 dont les bords verticaux avant 50 et arrière 52 sont reçus avec jeu entre les bords verticaux avant 80 et arrière 82 de la fente 78.

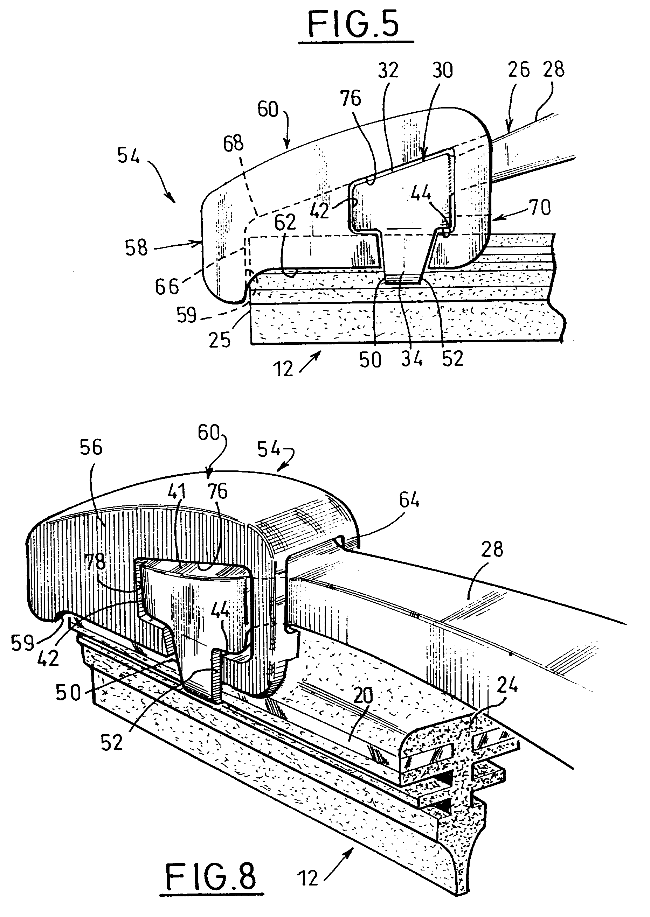

La largeur transversale L3 séparant les faces latérales externes 57 des joues latérales 56 est sensiblement égale à la largeur L2 de la tête 32 de manière que, dans la position montée illustrée sur la figure 5, les tronçons latéraux de la tête 32 délimitée transversalement par les faces latérales 40 soient reçus dans les ouvertures 76.

La mise en place de la coiffe d'arrêt 54 sur la griffe en forme d'étrier 30 s'effectue en introduisant cette dernière par l'arrière et verticalement de bas en haut dans la cavité interne de la coiffe 54.

Au cours de cette introduction, le passage de la tête 32 provoque une déformation élastique, en éloignement transversal l'une de l'autre, des joues latérales 56 de la coiffe 54 jusqu'à ce que la tête 32 soit emboîtée élastiquement dans les fenêtres 76.

Dans cette position illustrée aux figures 5 et 8, la coiffe 54 est accrochée sur la griffe en forme d'étrier 30 par rapport à laquelle elle occupe une position fixe.

Dans cette position de montage, et comme cela est illustré plus précisément sur la figure 7, la face interne 59 de la plaque transversale avant 58 s'étend en regard de la face transversale d'extrémité libre 25 de la raclette 12, avec un jeu longitudinal, de manière à constituer une surface de butée pour limiter les possibilités de déplacement longitudinal de la raclette 12 par rapport au palonnier 26.

La coiffe 54 selon l'invention peut donc d'être accrochée élastiquement sur une griffe en forme d'étrier 30 de conception classique sans nécessiter aucune modification de celle-ci.

La coiffe 54 est une pièce particulièrement robuste grâce à la présence de la plaque transversale avant 58 et de la plaque supérieure 60 qui relie les joues latérales 56 et seules les portions longitudinales arrière de ces dernières se déforment élastiquement lors de la mise en place de la coiffe 54, ou lors du démontage de cette dernière pour procéder au remplacement de la raclette d'essuyage.

## Revendications

1. Balai d'essuie-glace (10) du type comportant une structure de support d'une raclette d'essuyage qui comporte au moins un élément articulé (26) de support de la raclette d'essuyage (12) dont une portion d'extrémité (30) supporte la raclette d'essuyage (12) au voisinage de l'une de ses extrémités longitudinales (25), avec une possibilité de déplacement longitudinal limitée de la raclette d'essuyage (12) par rapport à la portion d'extrémité (30) de l'élément articulé (26) qui est conformée en un étrier qui chevauche un talon supérieur (24) de la raclette d'essuyage (12) et qui comporte deux branches latérales (34) qui s'étendent verticalement le long des faces latérales opposées (20) du talon supérieur (24) depuis une tête (32) de l'étrier (30), et du type comportant une coiffe amovible d'arrêt (54) qui est fixée par emboîtement élastique sur la portion d'extrémité de l'élément allongé (26) et qui comporte une surface transversale de butée (59) qui s'étend en regard de l'extrémité libre (25) du talon (14) de la raclette d'essuyage (12), caractérisé en ce que la coiffe amovible d'arrêt (54) comporte deux joues latérales (56) parallèles et déformables élastiquement dont chacune comporte une fenêtre (76) dans laquelle est reçue une portion latérale de la tête (32) de l'étrier (30) et qui comporte une fente (78) orientée vers le bas (62) pour le passage de la branche correspondante (64) de l'étrier (30).

2. Balai d'essuie-glace selon la revendication 1, caractérisé en ce que la largeur de la tête (32), et en ce que la largeur de la fente (78, 80, 82) de la fenêtre (76) correspond à celle de la branche (34, 50, 52).

3. Balai d'essuie-glace selon l'une des revendications 1 ou 2, caractérisé en ce que le contour intérieur de la fenêtre (76) et de la fente (78) épouse sensiblement le contour extérieur de la portion latérale correspondante de la tête (32) de l'étrier (30) et le contour de la branche correspondante (34).

4. Balai d'essuie-glace selon l'une quelconque des revendications précédentes, caractérisé en ce que les deux joues latérales (56) de la coiffe sont reliées entre elles, au voisinage de l'une de leurs extrémités longitudinales opposées (66), par une plaque transversale avant de liaison (58) qui s'étend en regard de l'extrémité libre du talon supérieur (25) de la raclette d'essuyage (12) et dont la face interne (59) constitue ladite face transversale de butée.

5. Balai d'essuie-glace selon la revendication 4, caractérisé en ce que les deux joues latérales (56) de la coiffe (54) sont reliées entre elles, par leurs bords longitudinaux supérieurs (68), par une plaque supérieure de liaison (60) qui prolonge vers l'arrière la plaque transversale avant de liaison (58) pour recouvrir la tête (32) de l'étrier (30).

6. Balai d'essuie-glace selon l'une des revendications 4 ou 5, caractérisé en ce que la partie arrière de la coiffe (54) comporte une ouverture (72) pour le passage d'un bras allongé (28) de l'élément articulé (26) qui s'étend longitudinalement vers l'arrière depuis la tête (32) de l'étrier (30).

7. Balai d'essuie-glace selon la revendication 6, caractérisé en ce que la largeur transversale (L1) du bras (28) est inférieure à la largeur transversale (L2) de la tête (32) de l'étrier (30) et en ce que le contour intérieur de l'ouverture (72) formée dans la partie arrière de la coiffe d'arrêt (54) épouse le contour extérieur du bras (28) de l'élément articulé (26).

8. Balai d'essuie-glace selon l'une des revendications 6 ou 7, caractérisé en ce que l'ouverture (72) débouche vers le bas pour permettre l'introduction du bras (28) dans l'ouverture (72).

9. Balai d'essuie-glace selon l'une quelconque des revendications précédentes, caractérisé en ce que la tête (32) de l'étrier (30) présente une forme sensiblement parallélépipédique rectangle.

10. Balai d'essuie-glace selon la revendication 9 prise en combinaison avec la revendication 6, caractérisé en ce que le bras allongé (28) de l'élément articulé (26) s'étend depuis une face transversale arrière (38) de la tête (32) de l'étrier (30).
